# EUROPÄISCHE PATENTSCHRIFT

(11) **EP 0 478 843 B1**
(45) Veröffentlichungstag und Bekanntmachung des Hinweises auf die Patenterteilung: **29.12.1993**
(21) Anmeldenummer: 90119194.0
(22) Anmeldetag: 05.10.1990
(51) Int. Cl.: B61D 47/00, B62D 53/08

(54) **Verfahren und Einrichtung zum seitlichen Überwechseln von Strassenfahrzeugen auf Eisenbahn-Niederflurwagen**
Procedure and equipment for transversally transferring road vehicles onto flatbed railway wagons
Procédé et dispositif pour transférer transversalement des véhicules routiers sur des wagons à plateforme basse

(43) Veröffentlichungstag der Anmeldung: 08.04.1992
(73) Patentinhaber: Leitz, Ludwig, Dr., D-35578 Wetzlar (DE)
(72) Erfinder: Leitz, Ludwig, Dr., D-35578 Wetzlar (DE)
(74) Vertreter: Riecke, Manfred

(56) Entgegenhaltungen:
- DE-A- 1 455 317
- FR-A- 2 250 657
- GB-A- 2 212 125

## Beschreibung

Die Erfindung betrifft ein Verfahren zum niveaugleichen Überwechseln von Straßenfahrzeugen, insbesondere von 3-Achs-Sattelschlepper-Aufliegern, von einer Rampe auf einen Niederflurwagen und Einrichtungen zur Durchführung des Verfahrens, zwecks Kombination des Straßen-Individualtransportes und des schienengebundenen Zugtransportes.

Der Stand derTechnik zur Kombination dieser beiden Transportarten wird z.B. dokumentiert durch die DE-PS 34 25 698 sowie die weiterentwickelte DE-PS 37 39 277. Der Zweck dieser Transportartenkombination ist es, ein Gesamt-Straßen- und Bahnsystem zu schaffen, das eine wirkliche rollende Landstraße einschließt, auf die jedes dafür hergerichtete Fahrzeug stets an Haltestationen mit Selbstbedienung auf- und abfahren kann, und zwar vom 40 to Sattelschlepper mit 3-Achs-Auflieger über PKW mit oder ohne Wohnanhänger bis zu einem zukünftigen Stadt-Kurzauto. Bei den bisher hierzu bekannt gewordenen Vorschlägen wurde bereits besonderer Wert darauf gelegt, daß der Übergang von der Straße zur Schiene, d.h. zu einem Niederflurwagen auf gleichem Niveau erfolgt, ähnlich wie auch Personen auf U- und S-Bahnen auf gleichem Niveau vom Bahnsteig in den Zug übersteigen.

Ein besonderer Schwerpunkt liegt bei allen bisherigen Vorschlägen darin, vom Aufwand und Gewicht und Bedienungskosten her möglichst günstige Lösungen auch für das rationellste Straßen-Transportmittel, nämlich den 3-Achs-Sattelauflieger zu finden, der auf der Bahn allein ohne Fahrer zu transportieren ist, ohne die allgemeine, möglichst universelle Nutzung der Bahn-Niederflurwagen zu behindern oder zu verhindern.

Der große Vorteil des Systems nach dem Stande der Technik ist, daß den Schienen gewissermaßen eine zweite Bewegungskoordinate mit einem Minimum an Wartungsbedarf hinzugewonnen wird, die sich nicht nur zu einer flächendeckenden Beweglichkeit auswirken kann: Sondern der Vorteil liegt auch in einer sowohl der Straße wie der Schiene zugute kommenden Verfügbarkeits- und Nutzungsfrequenz und damit in einer Wartezeiten- und Leerfrachtkosten-Reduzierung bei beiden Systemen.

Außerdem wird das Rangieren sowohl nach Waggonarten als auch nach Bestimmungsorten weitgehend überflüssig und Leer-Rücktransporte können vermieden werden, wodurch eine bessere zeitliche Ausnutzung des Wagenparks und eine bessere Deckung der personellen und materiellen Gemeinkosten möglich wird.

Die sonst noch bekannten Lösungen kombinierter Transportsysteme sind Spezialsysteme und gehen von dem Vorurteil aus, die Überführungseinrichtungen auf die Schiene müßten im wesentlichen Teile des rollenden Schienenmaterials, also der Niederflurwagen, sein, wodurch ein universell nutzbares System verhindert wird. Sie bieten daher auch keine rationelle Lösung für das Sattelschlepper-System.

Die Züge mit Auf- und Abladung vor Kopf in einer Reihe hintereinander lassen weder ein gleichzeitiges Auf- und Abbewegen der Fahrzeuge zu, noch gestatten sie ein solches Manöver an jeder wirtschaftlich sinnvollen Haltestation. Die Fahrer - auch der Sattelschlepper - müssen mit dem Zug mitfahren, es sei denn sie lassen ihre Zugmaschine im Stich. Das aus der US-PS 2 656 942 bekannte Trailer-System ermöglicht zwar im Gegensatz zu den im obigen Absatz erwähnten Systemen das Freisetzen der Zugmaschine und des Fahrers, hat aber gleichfalls die beiden Nachteile, daß die Zugzusammenreihung nacheinander erfolgen muß und ein beliebiges Aussteigen an Zwischenhaltestationen nicht möglich ist. Außerdem ist die Zugbeladung sehr zeitaufwendig, denn es wird zu diesem System angegeben, daß das Ankuppeln jedes einzelnen Trailers an je ein Schienenglied 3 Minuten dauert. Bei 20 Trailern mit Schluß- und Frontstück sind das 6 x 20 Minuten; für Zusammenstellung und Auflösung insgesamt 4 Std. Hinzu kommt noch das Ankuppeln der Lokomotive und das An- und Auskuppeln der Schläuche an 41 Stellen.

Ebenfalls bekannte Bahn-Niederflurwagen mit Sondervorrichtungen, z.B. einer Einschwenkbrücke zum Schrägauffahren oder, wie aus der Schweiz bekannt, mit einer Ausschwenkbühne in Rampenhöhe für Container, haben zwei Hauptnachteile:
1. Sie sind nicht verwendbar für die Lastfahrzeuge mit dem günstigsten Nutzlast-Fahrerkosten-Verhältnis, nämlich die 40 to Sattelschlepper-3-Achs-Auflieger.
2. Diese Spezial-Niederflurwagen sind nicht universell verwendbar, wodurch die eingangs genannten Vorteile der Nutzungs- und Angebotsfrequenz entfallen.

Der vorliegenden Erfindung liegt die Aufgabe zugrunde, die aus der DE-PS 34 25 698 und der DE-PS 37 39 277 bekannten Querrolleinrichtungen in Bezug auf geringere Anteile an Gewicht, Raumbedarf und Kosten zu übertreffen und dadurch bei einem niveaugleichen Übergangsverfahren gemäß den Merkmalen des Oberbegriffs des Anspruchs 1 den Speditionen insbesondere für die Sattelschlepper-Auflieger insgesamt ein kostengünstiges Transportsystem anzubieten.

Diese Aufgabe ist durch ein Verfahren gelöst, das die in Anspruch 1 angegebenen Merkmale aufweist.

Die der Erfindung zugrunde liegenden beiden Hauptgedanken sind:

1. daß man einen Auflieger mit pneumatisch hebbaren Achsen - sei er dreiachsig oder zweiachsig - um eine durch die Mitte einer der Achsen verlaufend gedachten senkrechten Achse verschwenken kann, wenn man die anderen Achsen vom Boden abhebt und dieses Verschwenken mittels einer an den Kronzapfen angekoppelten Zugmaschine vornimmt; gegebenenfalls aber auch mit einer Gabel eines Spezial-Gabelstaplers, ähnlich wie sie an deutsch-finnischen Fährschiffen eingesetzt werden.

2. daß man dieses Manöver nur vollziehen kann, wenn der Auflieger leer oder nur gering beladen ist und darum, bei beladenem Auflieger, eine Vorrichtung benötigt, die hilft, die Gesamtlast aufzunehmen. Hierzu werden zur gedachten senkrechten Mittenachse der auf dem Boden verbleibenden Aufliegerachse symmetrisch am Auflieger angeordnete Teleskopstützen vorgeschlagen, die an ihrem unteren Ende eine Drehscheibe tragen, die vor dem Verschwenkakt auf den Boden abgesenkt wird; in diesem Fall auf die Aufstellfläche eines Niederflurwagens. Diese Teleskopstützen und die Drehscheibe sind im wesentlichen fabrikationsübliche Bauelemente, in nur leicht abgewandelten Kombinationen.

Um das seitliche Überwechseln gemäß dem erfundenen Verfahren durchzuführen, ist zunächst auf den haltenden Zug mit dem Sattelschleppergespann in einem schrägen Winkel auf eine in der Mittenachse der Aufstellfläche markierte Stelle von der Rampe aus zuzufahren, so daß eine ungefähre konzentrische und rotationssymmetrische Stellung der Schwenkachse und Drehscheibe des Aufliegers zu der vorgesehenen Marke erreicht wird. Dieses erste Manöver erfolgt noch mit allen Aufliegerrädern in Bodenkontakt. Das Heben der am Schwenken nicht beteiligten Räder bzw. Achsen erfolgt erst, wenn die Teleskopstützen und die Drehscheibe ihre Stützstellung eingenommen haben.

Da die Auszugsbewegung der Teleskopstützen belastungsfrei erfolgt, kann dabei - wie üblich - mit Handkurbelbedienung ausgekommen werden.

Als Markierung auf der Aufstellfläche des Niederflurwagens wird ein gut reflektierender Körper vorgeschlagen, z.B. in Form von flachgewölbten "Katzenaugen", d.h. von eingepreßten Tripelspiegeln, wie sie für die Markierung von Ausweichspuren auf Autobahnen angebracht werden, also eine Markierung, die auch überrollt werden kann.

Die Markierung hat den Zweck, mit Hilfe einer Leitvorrichtung, z.B. opto-elektronischen Sensoren, das Auffahrmanöver so gezielt vorzunehmen, daß die Endstellung des Aufliegers auf dem Niederflurwagen innerhalb des erforderlichen Toleranzbereichs schnell erreicht wird.

Für das Blockieren des Aufliegers auf dem Niederflurwagen gibt es mehrere Möglichkeiten. Insbesondere der vordere Teil kann durch mittels Kurbel absenkbarer Zapfen an einer üblichen aber verstärkten Stütze blockiert werden, die in die Löcher des Gitterrostes der Niederflurwagen-Aufstellfläche eingreifen.

Zum Festlegen des rückwärtigen Teiles können Hemmschuhe und/oder Keile Verwendung finden, wie sie bereits in der DE-PS 37 39 277 beschrieben sind, die jedoch ebenfalls zusätzlich mit Zapfen zum Eingriff in den Gitterrost versehen sind.

Bei der eigentlichen Stützvorrichtung kann das Blockieren automatisch mit dem Absenken der Teleskopstützen und der Drehscheibe erfolgen. Zu diesem Zweck wird die reflektierende Markierung auf dem Niederflurwagen als Ring mit einer konisch zulaufenden Öffnung ausgebildet, in die ein in der Drehscheibe in x-, y-und z-Richtung federnd aufgehängter und konisch zugespitzter Zapfen eingeführt wird. Diese Ausbildung hat den Charakter einer Vorzentrierung. Die Nachzentrierung ergibt sich durch die Folgebewegungen des Aufliegers. Auch eine Sperre kann als Sicherung gegen ein Lösen der Verzapfung bei Aufschaukeln von Schwingungen vorgesehen sein. Der Vorteil einer solchen Einrichtung wäre eine Zeitersparnis bei der Sicherung des Aufliegers auf der Aufstellfläche. Doch bedingt dies eine engere Toleranz beim Ansteuern dieser Markierungen, was mit den bereits erwähnten Mitteln möglich ist.

In der Zeichnung ist die Erfindung in einem Ausführungsbeispiel dargestellt. Es zeigen:
Fig. 1 schematisch das Schräganfahren des Sattelschleppergespanns auf den Niederflurwagen,
Fig. 2 das Schwenken des Sattelschlepper-Aufliegers auf den Niederflurwagen,
Fig. 3 den Sattelschlepper-Auflieger auf dem Niederflurwagen in Seitenansicht,
Fig. 4 eine Ansicht in Pfeilrichtung C der Fig.3,
Fig. 5 u. 6 eine Ausbildung der Stützvorrichtung 024 für das Schwenkmanöver; Fig.5 als teilweisen Schnitt unterhalb des Längsträgers 29 vom Auflieger 2 im Aufriß; Fig.6 eine entsprechende Draufsicht,
Fig. 7 die Drehscheibe 024c der Stützvorrichtung in vergrößerter Darstellung mit federndem Mittelzapfen, sowie im unteren Teil die Drehscheibe 024c* in Auflage auf dem Niederflurwagen und eingerastetem Mittelzapfen,
Fig. 8 die Drehscheibe mit Mittelzapfen 024f;024g in Draufsicht,

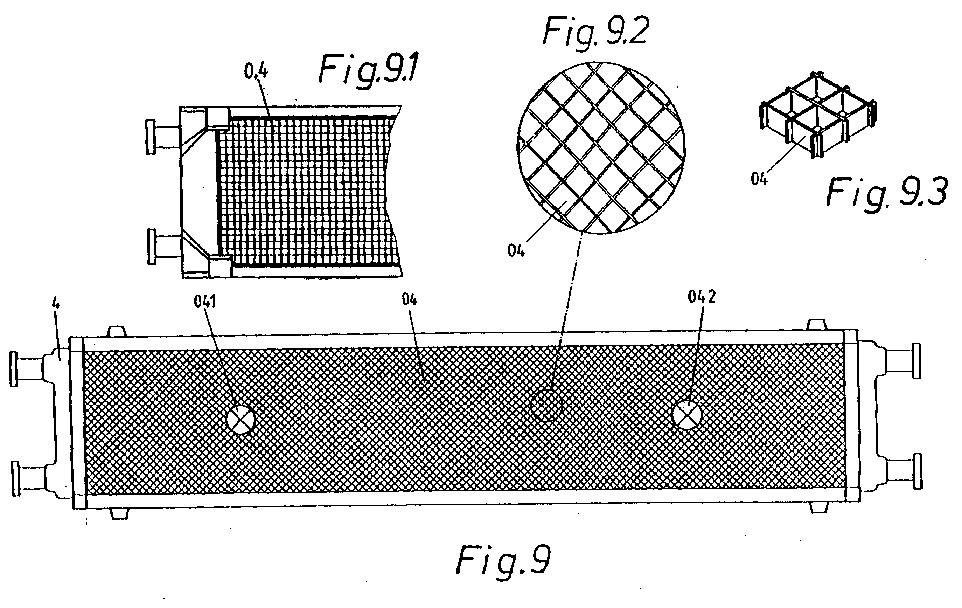

Fig. 9 einen Niederflurwagen 4 in Draufsicht auf seine Aufstellfläche 04 aus einem Gitterrost,
Fig. 9.1 eine Teil-Draufsicht auf die Aufstellfläche 04 mit dem Gitterrost in Parallelanordnung,
Fig. 9.2 ein vergrößerter Ausschnitt aus der Aufstellfläche mit dem Gitterrost in Diagonalanordnung,
Fig. 9.3 eine perspektivische Ansicht eines Gitterrost-Ausschnittes,
Fig. 10 in einem schematischen Aufriß die Benutzung des Gitterrostes der Aufstellfläche 04 zur Befestigung und Beistellung von Hemmschuhen 0581 und 0582, wobei im unteren Teil der Figur Ansichten von der Unterseite als Projektion dargestellt sind.

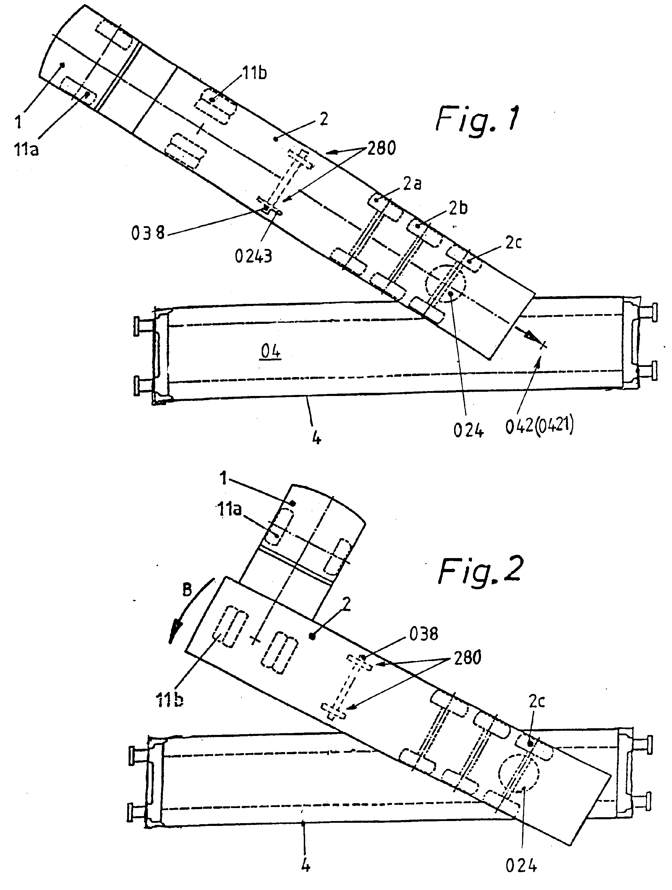

In Fig.1 ist mit 1 die Zugmaschine des Sattelschleppergespanns bezeichnet, die außerdem noch aus dem Auflieger 2 besteht. 4 ist der Eisenbahn-Niederflurwagen, dessen Aufstellfläche durchgehend mit 04 benannt ist.

Die Fig. 1 und 2 zeigen schematisch, wie das Sattelschleppergespann von einer nicht weiter angedeuteten Rampe seitlich auf den Niederflurwagen übergewechselt wird. Dieses Überwechseln besteht aus zwei Verfahrensschritten, nämlich erstens aus dem schrägen Anfahren einer Markierung 042 auf dem Niederflurwagen durch das Sattelschleppergespann, bis eine zwischen den hinteren Rädern 2c des Aufliegers angebrachte Stützvorrichtung 024 mit der Mitte der Markierung 042 auf der Aufstellfläche 04 zunächst fluchtet und zuletzt sich deckt.

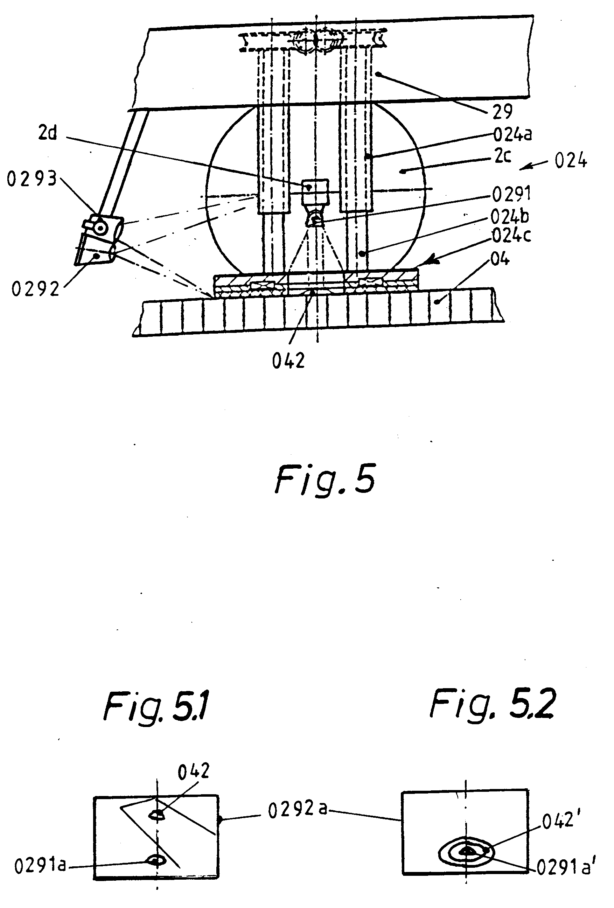

Um dieses Manöver schnell und gezielt vorzunehmen ist eine CCD-Fernseheinrichtung mit Objektiv 0292 (Fig.5) und eine auch nachts das Sehfeld ausleuchtende Lampe 0293 vorgesehen. Ferner ein Spotlicht 0291 zur Anzeige der Fluchtungslage der Stützvorrichtung 024 gegenüber der lichtreflektierenden Zielmarkierung 042; 0421 (Fig. 5.2 und 5.3).

Dann müssen alle zur Markierung 042 nicht konzentrischen Räder 2a und 2b, die bei der Schwenkbewegung radieren würden, angehoben werden. (Im Falle eines 2-Achs-Aufliegers müßte nur eine Achse anhebbar sein).

Doch zuvormuß die teleskopartig ausgebildete Stützvorrichtung abgesenktwerden, wie noch beschrieben werden wird, damit der Auflieger 2 entsprechend seinem Eigengewicht und der Nutzlast ausreichend abgestützt ist. Außerdem muß die Zugmaschine 1 um etwa 90° umgesetzt werden, wie aus Fig.2 erkennbar, damit sie mit ihren Rädern 11a, 11 b den Vorderteil des Aufliegers in Pfeilrichtung B auf den Niederflurwagen drücken kann.

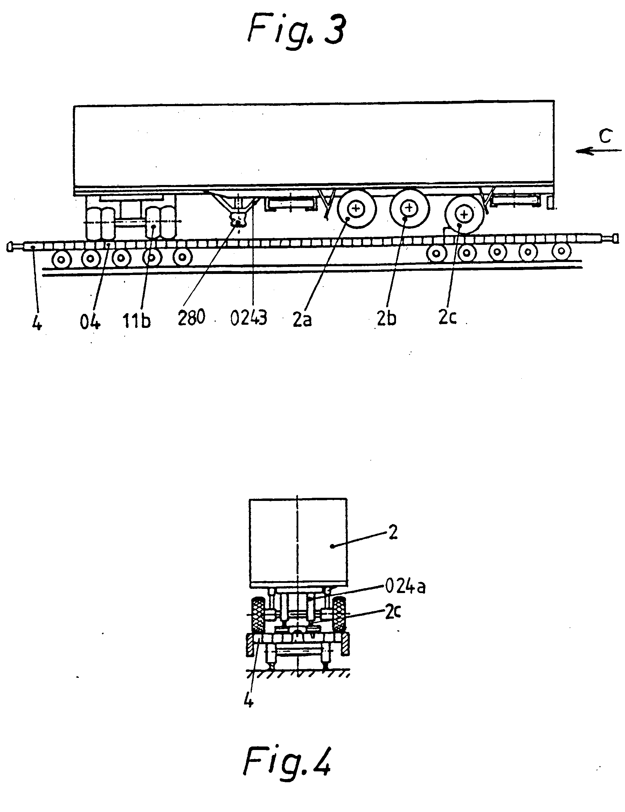

Die dann erreichte Stellung ist in seitlicher Ansicht aus Fig.3 erkennbar, während Fig.4 die Rückansicht zeigt. Danach können die Achsen und Räder 2a, 2b wieder auf die Auflagefläche 04 abgesenkt werden.

Nach Absenken der vorderen, hier nicht im Detail behandelten Stützvorrichtung 280 mit Verstärkung 0243 (Fig.2 u. 3) und Blockierung des Aufliegers durch eine Blockiervorrichtung 038, wie sie im einzelnen z.B. in der älteren Anmeldung Nr. 90105062.5 beschrieben ist, kann die Zugmaschine 1 vom Kronzapfen entkoppelt werden und steht für weitere Transportaufgaben frei zur Verfügung. Auf dem Niederflurwagen verbleibt nur der Auflieger 2, der ohne Fahrer im Zugverband mit dessem üblichen Kontroll- und Begleitpersonal transportiert wird.

Nach dem abgeschlossenen Auffahren des Aufliegers 2 auf die Aufstellfläche 04 des Niederflurwagens und nach dem Absenken der Stützvorrichtung 028 und dem Festmachen der Räder mit der Blockiervorrichtung werden auch alte übrigen Achsen mit ihren Rädern für die Bahnfahrt auf die Aufstellfläche abgesenkt und dort gegebenenfalls mit ähnlichen Hemmschuhen wie in Fig.1 mit 0581, 0582 bezeichnet festgelegt, bis dann die Zugmaschine 1 endgültig abgekoppelt wird.

Die gezeigte Art der Hemmschuhe sind auch fürdas Befestigen andere Fahrzeuge auf der universell nutzbaren Aufstellfläche gedacht.

Der besondere Vorteil der Stützvorrichtung 2024 ist ihr geringer Raumbedarf, der die leichte Unterbringung eines Reservereifens ermöglicht, sowie ihre Anwendbarkeit auch bei Tankwagen.

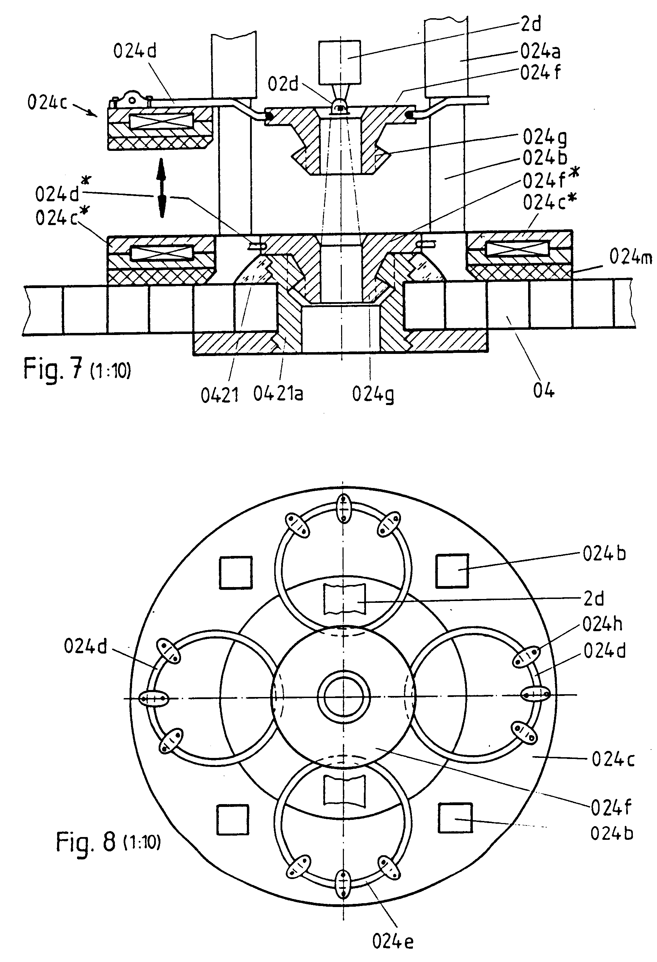

Die wesentliche Einrichtung zur Durchführung des Verfahrens ist die hintere Stützvorrichtung, die im Detail in den Figuren 5 - 8 dargestellt ist. In Fig.5 und 7 ist mit 2d die hintere Achse der Räder 2c (Fig.5 u. 6) bezeichnet, zu der die Stützvorrichtung symmetrisch angeordnet ist. In der beschriebenen Ausführungsform besteht sie aus den vier Teleskopbeinen 024a (Fig.5 u. 6), an derem unteren Ende eine Drehscheibe 024c befestigt ist. Diese besteht ihrerseits aus zwei Scheiben 024c' und 024c", zwischen denen ein Wälzlager derart gelagert ist, daß die Scheibe 024c" relativ zur anderen Scheibe drehbar ist. Beim Aufsetzen der Stützvorrichtung auf die Aufstellfläche 04 ist daher der gesamte Auflieger um den zentrischen Aufsetzpunkt drehbar. Eine elastische Schicht in Scheibenform 024m aus Kunststoff mit Fasereinlagen oder sonstigem elastischen Material wirkt stoßdämpfend und spannungsausgleichend zwischen der Scheibe und der festen Aufstellfläche.

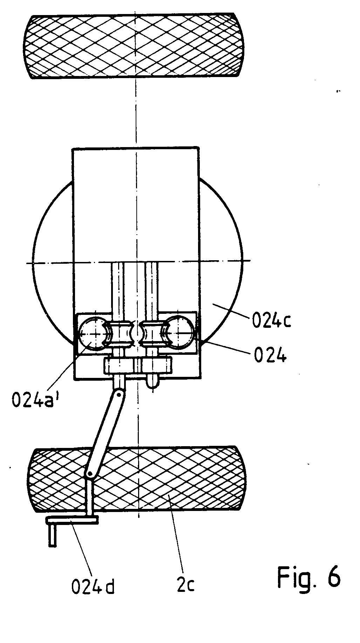

Für das Absenken der Teleskopbeine 024b ist ein übliches Schneckenradgetriebe vorgesehen, das schematisch in den Fig.5 und 6 gezeigt ist, und das an den Längsträgern 29 des Aufliegers 2 befestigt ist. Dabei ist mit 024a' die Spindel, mit 024d die Handkurbel, mit 024a die Führungshülse für die Teleskopbeine 024b bezeichnet.

An der Drehscheibe 024c ist ein konischer Zapfen 024f befestigt, der mit einem vierteiligen Bajonett 024g versehen ist. Die komplementäre Bajonetthülse 0421a ist Teil der Aufstellfläche des Niederflurwagens und sitzt innerhalb eines ringförmig ausgebildeten Katzenauges 0421 (Fig.7). Die Achse der Bajonetthülse bzw. des ringförmigen Katzenauges stellt die Markierung der Fig.1 dar, mit der die Mittenachse der Stützvorrichtung zum Fluchten zu bringen ist, damit bei deren Absenken der Zapfen 024f in die Hülse 0421a greift.

Der Zapfen 024f wird an der Drehscheibe 024c durch Ringfedern 024d, 024e gehalten (Fig.7 u. 8), die dem Zapfen eine Nachgiebigkeit in x-, y- und z-Richtung geben, so daß der Zapfen auch dann in die Bajonetthülse greift, wenn der Auflieger nach dem schrägen Auffahren auf den Niederflurwagen mit seiner Stützvorrichtung 024 nicht absolut zentrisch zum Mittelpunkt der Markierung (Katzenauge 0421; 0421a) steht.

Für die Ausbildung des Kurvenverlaufs der Federkennlinien der vorgeschlagenen Ringfedern 024d verbleibt dem Fachmann ein weitgehender Spielraum für alle Raumrichtungen. So kann die Kennlinie für das Ausfedern des Zapfens in der Senkrechten nach oben in einem unteren Kurvenbereich wesentlich flacher ansteigend, also elastischer gestaltet sein, durch eine entsprechend federnd ausgebildete Halterung 024h.

Dies ist von Vorteil, wenn die Stützvorrichtung zum Reifenwechsel eingesetzt wird und damit Wagenheber auch für den Extremfall von 2 Reifenpannen bei Vollbeladung ersetzt werden können. Für diesen Fall muß der Mittenzapfen nach oben ausweichen können. Von Vorteil ist dies aber auch für das elastische Einkuppeln des Zapfens und des Bajonetts.

Nach unten dagegen wirken die Federn o24d, da sie sich in dieser Richtung an der inneren oberen Kante der Drehscheibe 024c abstützen, sehr hart, was der Sicherung des Aufliegers auf dem Niederflurwagen 4 gegen ein Abheben zugute kommt. Für das seitliche Ausfedern in der Horizontalen lassen sich, in ähnlicher Weise, durch kurvenförmig ausgebildete Anschläge bzw. Erhöhungen auf der oberen Drehscheibenfläche 024c alle gewünschten Federkennlinien-Kurven realisieren. Vorteilhaft ist auch die Symmetrie der Anordnung für eine Nachzentrierung. Eine solche Nachzentrierung des Aufliegers 2 in der Längsachse seiner Fahrtrichtung kann beim Absenken der Stützvorrichtung 024 im Augenblick des Übergangs von der Noch-Freibeweglichkeit der Kunststoff-Unterseite der Drehscheibe 024c" stattfinden bis zur Kontaktnahme mit der Aufstellfläche 04 und der nachfolgenden schließlichen Vollbelastung.

Da der Zapfen in der Kontaktnahme einen Vorlauf hat, kann in diesem Moment, bei einem Rest von Beweglichkeit im Antrieb des Fahrzeugs, ein Einspielen stattfinden. Dazu ist es allerdings zweckmäßig, den Antrieb der Teleskopspindel 024a für die Teleskopbeine 024b motorisch mit Einmann-Bedienung vom Fahrerhaus aus steuerbar zu gestalten, um das Ausrollen des Gespanns mit dem Einkuppeln des Zapfens 024f zu synchronisieren, da die Reibung der Bewegung immer wesentlich geringer ist, als die Reibung der Ruhe, und sich so die Federkräfte noch auswirken können.

Der Rest an verbleibender Spannung zwischen der Stützvorrichtung 024 und den Reifen des Räderpaares 2c wird mindestens teilweise durch die Schwenkbewegung eliminiert und - außer von den Reifen - von der Kunststoff-Zwischenschicht der unteren Drehscheibe 024c" aufgenommen. Diese Kunststoff- oder Gummischicht ist mittels Einlagen, z.B. Glasfasern, Kohlefasern, Aramid oder Stahldraht so zu gestalten, daß sie in der Vertikalen bei guter Dämpfung eine hohe Festigkeit und Tragfähigkeit hat, dagegen bei gleichzeitiger guter Dämpfung in der Horizontalen eine hohe Elastizität besitzt. Dazu kann eine Fasereinlage dienen, die den Charakter einer Bürste hat, bei der die Borsten senkrecht stehen und die ein seitliches Schwingen erlaubt, das durch die Zwischenfüllmasse gedämpft wird.

Die Spannungen und Feinschwingungen gegenüber dem z.b. bajonettverriegelten Zapfen während der Bahnfahrt wird wiederum durch die Ringfedern aufgenommen, sowie dies auch bei dem Schwenkvorgang geschieht.

Das Bajonett sollte vorzugsweise vierteilig sein und symmetrisch nach den Längsachsen orientiert: Der Hülsenteil des Bajonetts nach der Mittelachse des Niederflurwagens 4 orientiert, der Zapfenteil dagegen nach der Mittenachse des Aufliegers. Bei einer Breite der Bajonettlappen von 20° verbleibt für den Schräganfahrwinkel des Gespanns eine reichliche Toleranz von 50°. Die Verriegelung des Bajonetts erfolgt dann automatisch mit dem beschriebenen Schwenkvorgang des Aufliegers.

Diese Manöver können sehr schnell erfolgen, vorausgesetzt, daß der Anfahr- und Steuervorgang gut gezielt erfolgt. Hierfür können an sich alle nach dem Stand der Technik bekannten Ziel- und Steuervorrichtungen, seien sie manuell oder automatisch, benutzt werden, z.B. auch eine gegebenenfalls mit einer Schmutzschutzvorrichtung versehene Fernseheinrichtung 0292 (Fig.5), mit Beleuchtungshilfen 0293 für das Sehfeld eines im Fahrerhaus untergebrachten Monitors, und ferner mit einer Spotlichtlampe 0291, die einen Lichtfleck 0291a (Fig.5.1) auf den Boden wirft.

Im Sehfeld des Monitors erscheint dann dieser Lichtfleck 0291a sowie die von der Lichtquelle 0293 beleuchtete reflektierende Markierung 042 bzw. 0421, wie dies in Fig.5.1 gezeigt ist. Aufgabe des Anfahrmanövers ist es, beide Markierungen zur Deckung zu bringen, wie in Fig.5.2 mit den Bezugszeichen 0291a' und 042' dargestellt. Sobald die Deckung erreicht ist, erfolgt die Absenkung der Stützvorrichtung 024 in der bereits beschriebenen Weise.

Die Markierung 042 bzw. 0421 (Katzenauge) hat eingeprägte Tripelspiegel, weiche die Strahlen des Spotlichtes 0291 reflektieren und dadurch den Mittelpunkt besonders gut erkennbar machen. In Fig.5 ist der Zapfen 0247f, 0247g weggelassen, und das Katzenauge 042 ist als kreisförmige Wölbung direkt auf der Aufstellfläche angeordnet. In beiden Ausführungsformen (Fig.5 und Fig.6, 7) besteht das Katzenauge aus einem auf Druck belastbaren Material so daß es ohne Beschädigung überrollt werden kann.

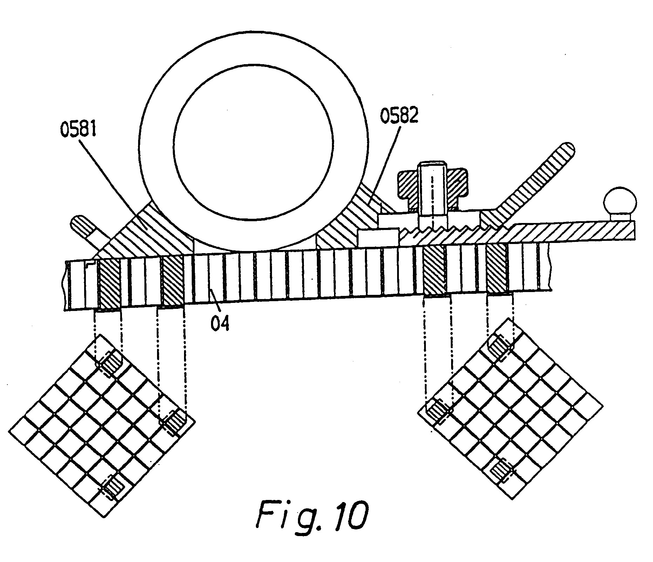

Das Sichern des Aufliegers auf dem Niederflurwagen kann auch in einer vereinfachten Ausführungsform vorgenommen werden: Z.B. durch die Beistellung von Hemmschuhen 0581,0582, wie dies in Fig.10 dargestellt ist, oder auch durch absenkbare Keile, die hier nicht weiter gezeigt sind.

Abschließend ist noch zu bemerken, daß bei dem Verfahren die Anordnung der Stützvorrichtung 024 an der hinteren Achse nicht zwingend ist sondern hier nur beispielsweise gezeigt wird. Die Stützvorrichtung kann auch mit anderen Achsen zusammen für das Verfahren kombiniert werden, z.B. mit einer Achse mehr zur Mitte des Aufliegers 2 hin. Wegen des Überstandes des Aufl iegers beim Auffahren bedingt dies dann aber (zur Schiene) zweiseitige Rampen.

## Patentansprüche

1. Verfahren zum seitlichen Hin- und Zurück-Überwechseln von Straßenfahrzeugen bis einschließlich 3-Achs-Sattelschlepper-Aufliegern von einer Rampe aufeinen niveaugleichen Eisenbahn-Niederflurwagen mit durchgängig ebener, universell benutzbarer, von einem Gitterrost gebildeter Aufstellfläche,
dadurch gekennzeichnet, daß die seitliche Überwechsel-Bewegung aus folgenden Verfahrensschritten zusammengesetzt ist:
erstens aus einem schrägen rückwärts oder vorwärts Auffahren des Straßenfahrzeuges auf den Niederflurwagen (4) bis zum Fluchten einer am rückwärtigen oder mittleren Teil des Straßenfahrzeuges mittig zu dessen Längsachse absenkbar angeordneten drehbaren Stützvorrichtung (024) mit einer auf der Aufstellfläche (04) angebrachten Markierung (042;0421),
zweitens aus einem Absenken der drehbaren Stützvorrichtung (024) bis zur festen Auflage auf der Aufstellfläche (04),
drittens aus einem Anheben der bei der Schwenkbewegung auf dem Boden radierenden Räder (2a;2b), und
viertens aus einer Schwenkbewegung des Straßenfahrzeuges um die festgelegte Stützvorrichtung (024) bis zum Fluchten der Längsachse des Straßenfahrzeuges mit der mittleren Längsachse des Niederflurwagens (4).

2. Verfahren nach Anspruch 1, zum seitlichen Überwechseln von Sattelschlepper-Aufliegern, dadurch gekennzeichnet, daß die Schwenkbewegung des Aufliegers (2) von der Zugmaschine (1) in einer 90°igen Kupplungsstellung bewirkt wird.

3. Verfahren nach Anspruch 1, dadurch gekennzeichnet, daß bei der automatisch oder manuell gezielten Steuerung des Fahrmanövers Sensoren mit oder ohne optische Anzeige oder eine andere bekannte technische Sicht- und Orientierungshilfe Verwendung findet, die z.B. besteht aus Fernsehauge (0292; Fig.5), in der Mittenflucht unter dem Auflieger (2) angebracht, dem Monitor im Fahrerhaus, einer Spotlichtlampe (0291; Fig.5), deren auf den Boden projizierter Lichtkreis (0291a; Fig.5.1) die jeweilige Lage der Mittelachse der Stützvorrichtung (024) anzeigt, wobei dieser Lichtkreis (0291a) mit Zielmarkierung (042;0421) fluchtend auf der Bildschirm-Senkrechten gehalten wird bis beide sich konzentrisch decken (042';0291a'; Fig.5.2).

4. Einrichtung zur Durchführung des Verfahrens nach den Ansprüchen 1-3, dadurch gekennzeichnet, daß die Stützvorrichtung (024) symmetrisch zwischen einem PaarderAufliegerräder (2c) angeordnet ist, und daß die übrigen Aufliegerräder (2a;2b) abhebbar sind.

5. Einrichtung nach den Ansprüchen 1 - 4, dadurch gekennzeichnet, daß der Fuß der Stützvorrichtung (024) aus einer absenkbaren Drehscheibe (024c';024c") besteht.

6. Einrichtung nach Anspruch 5, dadurch gekennzeichnet, daß die Stützvorrichtung (024) von aus- und einfahrbaren Teleskopbeinen (024a;024b) getragen wird.

7. Einrichtung nach Anspruch 5, dadurch gekennzeichnet, daß an der Drehscheibe (024c') zentrisch ein Zapfen (024f;024g) angebracht ist, der beim Absenken der Stützvorrichtung (024) in eine komplementäre Paßhülse (0421a;0421a^{x}) in derAufstellfläche (04) eingreift und eine Vorzentrierung der Aufliegerstellung bewirkt.

8. Einrichtung nach Anspruch 7, dadurch gekennzeichnet, daß der Zapfen (024f;024g) an der Drehscheibe (024c') in x-, y- und z-Richtung federnd aufgehängt ist.

9. Einrichtung nach den Ansprüchen 7 und 8, dadurch gekennzeichnet, daß an dem Zapfen eine Sperre vorgesehen ist, die den Zapfen auch gegen auftretende Schwingungen in der Paßhülse (0421a ) hält, und vorzugsweise als Bajonettverriegelung (024f ; 024g ) ausgebildet ist, die durch die Schwenkbewegung des Aufliegers automatisch verriegelt wird.

10. Einrichtung zur Durchführung des Verfahrens nach Anspruch 1, dadurch gekennzeichnet, daß die Markierung (042; 0421) auf der Aufstellfläche (04) des Niederflurwagens (4) aus einem refektierenden Körper besteht, der von einer Lampe (0293) beleuchtet wird.

11. Einrichtung nach Anspruch 10, dadurch gekennzeichnet, daß der reflektierende Körper ein flachgewölbtes Katzenauge mit eingepreßten Tripelspiegeln ist, das ohne Schaden überrollbar ist.

12. Einrichtung nach den Ansprüchen 7 und 11, dadurch gekennzeichnet, daß der reflektierende Körper als Ring (0421) ausgebildet ist, der die komplementäre Paßhülse (0421 a) zentrisch umgreift.

## Claims

1. Method for the lateral forward and back transfer of road vehicles up to and including 3 axle articulated lorry semitrailers from a ramp to a same-level low-deck railway wagon with continuously flat, universally usable deck surface formed by a grating, characterised thereby that the lateral transfer movement is made up from the following method steps:
firstly from an oblique rearward or forward driving of the road vehicle onto the low-deck wagon (4) until alignment of a rotary support device (024), which is arranged at the rearward or middle part of the road vehicle and centrally of the longitudinal axis thereof to be lowerable, with a marking (042; 0421) applied to the deck surface, secondly from a lowering of the rotary support device (024) until firmly resting on the deck surface (04),
thirdly from a raising of the wheels (2a; 2b) turning on the ground during pivot movement, and
fourthly from a pivot movement of the road vehicle about the fixed support device (024) until alignment of the longitudinal axis of the road vehicle with the central longitudinal axis of the low-deck wagon (4).

2. Method according to claim 1, for lateral transfer of articulated lorry semitrailers, characterised thereby that the pivot movement of the semitrailer (2) is effected from the tractor unit into a coupled setting angled at 90°.

3. Method according to claim 1, characterised thereby that finding use in the automatically or manually effected control of the driving manoeuvre are sensors with or without optical indication or another known technical sighting and orienting aid, which consists of, for example, a television eye (0292; Fig. 5), mounted in the centre axis under the semitrailer (2), the monitor in the driver's cabin, a spotlight lamp (0291; Fig. 5), the light circle (0291a; Fig. 5.1) of which projected onto the ground indicates the respective position of the centre axis of the support device (024), wherein this light circle (0291a) is kept on the image screen verticals in alignment with a target marking (042; 0421) until the two concentrically coincide (042'; 0291a'; Fig. 5.2).

4. Equipment for carrying out the method according to claims 1 to 3, characterised thereby that the support device (024) is arranged symmetrically between a pair of semitrailer wheels (2c) and that the remaining semitrailer wheels (2a; 2b) are raisable.

5. Equipment according to claims 1 to 4, characterised thereby that the foot of the support device (024) consists of a lowerable turntable (024c'; 024c").

6. Equipment according to claim 5, characterised thereby that the support device (024) is carried by extensible and retractible telescopic legs (024a; 024b).

7. Equipment according to claim 5, characterised thereby that a pin (024f; 024g) is centrally mounted at the turntable (024c'), which pin engages in a complementary fitting sleeve (0421 a; 0421 aX) in the deck surface (04) on lowering of the support device (024) and effects a preliminary centring of the semitrailer setting.

8. Equipment according to claim 7, characterised thereby that the pin (024f; 024g) at the turntable (024c') is resiliently suspended in x, y and z direction.

9. Equipment according to claims 7 and 8, characterised thereby that provided at the pin is a lock which holds the pin also against occurring oscillations in the fitting sleeve (0421a), and is preferably constructed as a bayonet lock (024f; 024g), which is automatically locked by the pivot movement of the semitrailer.

10. Equipment for carrying out the method according to claim 1, characterised thereby that the marking (042; 0421) on the deck surface (04) of the low-deck wagon (4) consists of a reflective body which is illuminated by a lamp (0293).

11. Equipment according to claim 10, characterised thereby that the reflective body is a shallowly domed cats- eye with pressed in triple reflectors, which can be run-over without damage.

12. Equipment according to claims 7 and 11, characterised thereby that the reflective body is constructed as a ring (0421), which centrally engages around the complementary fitting sleeve (0421a).

## Revendications

1. Procédé pour le transfert latéral de véhicules routiers, y compris des semi-remorques à trois essieux à partir d'une rampe d'accès sur un wagon de chemin de fer surbaissé de même niveau ayant un plateau utile réalisé sous forme de grille, totalement plan et universellement utilisable, caractérisé en ce que le procédé de déplacement pour le transfert latéral est constitué par les étapes suivantes:
Premièrement par une marche d'approche oblique vers l'arrière ou vers l'avant du véhicule routier sur le wagon surbaissé (4) jusqu'à l'alignement d'un dispositif support (024) tournant abaissable disposé sur la partie arrière ou médiane du véhicule routier et au milieu de l'axe longitudinal de celui-ci avec un marquage (042, 0421) placé sur le plateau du wagon (04),
Deuxièmement par un abaissement du dispositif support (024) jusqu'à obtention d'un appui solide sur le plateau du wagon (04),
Troisièmement par un léger soulèvement dû aux roues (2a, 2b) frottant sur le sol lors du mouvement de rotation, et
Quatrièmement par un déplacement de rotation du véhicule routier autour du dispositif support (024) immobilisé, jusqu'à l'alignement de l'axe longitudinal du véhicule routier avec l'axe médian du wagon surbaissé (4).

2. Procédé selon la revendication 1 pour le transfert latéral de semi-remorques, caractérisé en ce que le déplacement en rotation de la semi-remorque (2) est exécuté par le tracteur (1) dans une position d'accouplement de 90°.

3. Procédé suivant la revendication 1, caractérisé en ce que des détecteurs avec ou sans indication optique ou tout autre dispositif d'assistance pour la visualisation ou l'orientation techniquement connues sont utilisés lors du guidage automatique ou manuel visé pour la manoeuvre, assistance qui est par exemple constituée par une caméra de télevision (0292 ; fig. 5) disposée sur la semi-remorque (2) et dans l'axe, un moniteur dans la cabine du conducteur, une lampe spot (0291 ; fig. 5) dont le cercle lumineux (0291a; fig. 5.1) projeté sur le sol indique la position effective de l'axe médian du dispositif support (024), ce cercle lumineux (0291a) avec marque d'objectif (042,0421) étant maintenu en alignement sur la verticale de l'image jusqu'à ce que les deux se recouvrent concentriquement (042', 0291a'; fig. 5.2).

4. Installation pour l'éxécution du procédé selon les revendications 1 à 3, caractérisée en ce que le dispositif support (024) est monté symétriquement entre une paire de roues de la semi-remorque (2c), et en ce que les autres roues de la semi-remorque (2a, 2b) sont démontables.

5. Installation selon les revendications 1 à 4, caractérisée en ce que le pied du dispositif support (024) est constitué par un disque tournant (024c', 024c") abaissable.

6. Installation selon la revendication 5, caractérisée en ce que le dispositif support (024) est porté par des jambes téléscopiques (024a, 024b) pouvant être sorties ou rentrées à volonté.

7. Installation selon la revendication 5, caractérisée en ce qu'au centre du disque tournant (024c') est disposé un goujon (024s, 024g) qui pénètre dans une douille correspondante (0421a, 0421a') complémentaire dans le plateau du wagon (04) lors de la descente du dispositif support (024) et qui produit un pré-centrage pour la mise en place de la semi-remorque.

8. Installation selon la revendication 7, caractérisé en ce que le goujon (024f, 024g) est suspendu élastiquement sur le disque tournant (024c') dans les directions X, Y et Z.

9. Installation selon les revendications 7 et 8, caractérisée en ce qu'il est prévu sur le goujon un arrêt qui retient le goujon dans sa douille correspondante (0421a), même contre des oscillations pouvant survenir et qui est réalisé de préférence sous la forme d'un verrouillage à baillonnette (024f, 024g), qui se verrouille automatiquement par le mouvement tournant de la semi-remorque.

10. Installation pour l'exécution du procédé selon la revendication 1, caractérisée en ce que le marquage (042, 0421) sur le plateau (04) du wagon surbaissé (4) est constitué par un corps réfléchissant qui est illuminé par une lampe (0293).

11. Installation selon la revendication 10, caractérisée en ce que le corps réfléchissant est un catadioptre bombé plat à l'aide de petits miroirs réfléchissants incorporés par certissage sur lequel on peut rouler sans l'endommager.

12. Installation selon les revendications 7 et 11, caractérisée en ce que le corps réfléchissant est réalisé sous la forme d'une couronne (0421) qui entoure concentriquement la douille correspondante complémentaire (0421a).
